# EUROPEAN PATENT SPECIFICATION

(11) **EP 1 712 337 B1**
(45) Date of publication and mention of the grant of the patent: **20.02.2008**
(21) Application number: 06006074.6
(22) Date of filing: 24.03.2006
(51) Int. Cl.: B27M 1/08, B27C 9/04, B23Q 1/54, B23Q 1/62, B23Q 39/04, B23Q 7/04, B23Q 1/01

(54) **Machining centre with two operating units with part handling means**
Bearbeitungszentrum mit zwei Arbeitseinheiten mit Mitteln zur Handhabung des Werkstücks
Centre d'usinage avec deux unités de travail avec moyens de manipulation de la pièce

(30) Priority: 15.04.2005 IT MI20050671
(43) Date of publication of application: 18.10.2006
(73) Proprietor: Balestrini Renzo S.p.A., 20030 Seveso MI (IT)
(72) Inventor: Balestrini, Antonio, 20030 Seveso (Milan) (IT)
(74) Representative: Lecce, Giovanni

(56) References cited:
- EP-A- 0 608 746
- EP-A- 1 250 976
- DE-A1- 19 518 965
- DE-U1- 29 603 804

## Description

This invention refers to a machining centre with two operating units with part handling units.

More in particular, this invention refers to a machining centre, specially fit to perform operations on parts or semi-finished products of chairs and furniture, equipped with one or more operating units, possibly two, including means that suit the picking, the placing and the movement of the parts being machined.

As already known, the industrial production of pieces of furniture like chairs, tables, armchairs and the like takes place through the use of special machines, furnished with suitable equipment to mill, drill, shape, dovetail and more, meant to finish parts or match the parts with one another. Such operations include, for instance, milling cogging, drilling and slots created on splines or blocks of wood or any other suitable material and are currently executed by means of traditional-technology machines or by machining centres; these operating centres typically include various tools, which are driven by electronically-operated electric chucks, to be moved along several axes in order to work on the part being machined.

The known operating centres that are used in this area traditionally include only one operating unit, where the tool is made move along three mutually orthogonal axes, as well as rotationally along at least one plane.

These movements, which are typically managed and performed by means of a numerical control along 5 axes, allow for space orientation and travels required by the tools in order to execute the above-detailed machining. This known solution inevitably entails the problem of a limited production, this meaning that only one operation at a time can be executed on the part being machined.

In order to remedy this inconvenience a machining centre has been conceived, already known from EP 1 250 976 A1, which includes two operating units placed and made move on the same plane or level through one sole slide. Such a solution is not free from inconveniences, since it does not permit simultaneous intervention on a same part and in adjoining positions with two different tools. In cases when the two units are required to operate in the same position or in positions that are very close to one another, either is preferably and temporarily located outside the other one's operating range. Moreover, if one needs to intervene on all of the faces of parts that are parallelepiped or prismatic in shape, the known work centres needs at least a handling action, an intermediate relocation or turnover of the parts, as the work units cannot move in space to cover all of the six faces.

In work centres with one as well as with two operating units, a further inconvenience is met in connection with the loading/unloading of parts to be machined. Indeed, the latter need to be picked from a loading magazine where they are located in a known manner and repeatedly handled to be submitted to the various machining stages. The parts may even need to be capsized, as when they are being stacked in the magazine it is sometimes necessary to place them in a special position or with a given orientation, whereas at the machining stage a different orientation may be required. All part handling, including unloading when the machining is over, is traditionally carried out by means of automatic systems and means that installed on the machining centre. This traditional solution entails the problem of high system costs, ensuing from the need to prearrange and install such loading/unloading systems which prove to very complicated, too; furthermore, the presence of the latter systems sometimes makes the handling of the operating units more complicated, owing to their dimensions.

The equipment described in the above-mentioned patent application envisages both operating units to be located behind the part holding bench, and such architecture makes access to two of the side faces to be machined rather difficult, if not impossible. In fact, the operating units only have direct access for the rear face, the upper face and the two side faces. The part face opposed to the one hosting the operating units, and the lower part face cannot be reached unless suitable overturning devices or gears, which are not aiways accurate and not easily adjustable, are fitted. Another inconvenience highlighted by this type of equipment is that, to avoid impediments that hinder the tools from accessing the part to be machined, the part bearing benches are installed on a structure that is separate from the operating units bearing body. This considerably reduces rigidity of the assembly and creates problems in terms of operating accuracy.

Other problems concern the setting adjustments of the loading/unloading system as well as the bearing and fastening benches of the parts to be machined which, on this equipment, shall be manually performed by properly trained operators.

These adjustments require long operating time, and positioning accuracy is extremely subjective, as it depends on the operator's skills. The machining accuracy that can be obtained on the part largely relies on the aforementioned adjustments.

Another problem shown by the mentioned equipment is in connection with the difficulty in configuring the parts bearing benches so as to befit the different morphologies and sizes of the parts.

In such a case, the system needs to be fitted with different types of supports and locking devices, which implies a long tooling and equipping time as well as high costs for the tools to be mounted and removed.

A further problem shown by this equipment is that it provides a difficult access to the parts loading/unloading in manual mode, which is useful during the equipment setting and preparation stage or when lots of reduced size are machined, as the long time required to prepare the automated loading/unloading systems proves to be excessively burdensome.

EP0608746 discloses a numerically controlled woodworking machine for long workpieces such as beams, comprising a portal housing through which passes a guide device perpendicularly in the horizontal direction, with a compound rest movable in the horizontal and vertical directions arranged or the portal housing.

The rest further carries an intermediate piece rotatable about a vertical angle axis, and a spindle motor rotatable about a horizontal angle axis is mounted on said intermediate piece. The guide device comprises carriages movable along a guideway, adapted to clamping beam and pivot it about an axis running in the horizontal direction. The machine aims to improve the stability of the bearing elements and to increase the machining accuracy.

DE 296 03 804 U discloses a wood milling and cutting machine comprising a workpiece supporting rest and a portal movable along the rest and carrying a laterally and vertically movable arrangement with a tool head.

The aim of this invention is to remedy the problems reported above.

The above objects are achieved through a machining centre as claimed in claim 1.

Its special embodiment allows the operating units to move freely to execute all type of machining, both at the ends or along the part by overlapping their range of action, regardless of the longitudinal positions of either unit compared to the other.

If two units are required to operate simultaneously in the same positions or in positions that are very close to one another, there is no need to take one of them out of the other one's range of action.

A further object of this invention is to provide a machining centre as described above, where all handling, picking and placing of parts, especially as regards their location on the work surface, any movement or capsizing as well as any subsequent unloading when all operations are over, are performed in a simple and easy manner, with no need of bulky equipment that would only hinder the movements of the operating units or would lead to a general increase of dimensions and costs.

A further object of the invention is to provide a machining centre where the positioning of the benches is executed by the equipment itself through a dedicated positioning programme to be stored within the part machining and positioning programme, so as to reduce the operator's intervention at the machine preparation stage, optimise accuracy of the parts positioning process on the work benches and thus allow for the maximum accuracy of the machining process.

A further object of the invention is to provide a machining centre that can set up a large number of automated or manual parts loading/unloading, lodging and locking solutions, in consideration of their morphology, type and size.

A further object of the invention is to provide the users with a machining centre that is such as to ensure a high level of resistance and reliability over time, and which can also be easily and cheaply manufactured.

These and more objects are fulfilled by the machining centre of this invention which, being specially suitable to carry out operations on parts or semi finished parts of chairs and pieces of furniture arranged over a work bench starting from a magazine, includes two operating units, that are associated with carriages that slide along cross beams operating on rails and located on different levels or misaligned from one another, the said operating units being equipped, next to one end, with an electric chuck with shafts that are connected with machining tools, this chuck being connected in a movable manner to a revolving head.

The constructional and functional features of the machining centre with two operating units and handling units of this invention can be better understood in the following description, where reference is made to the annexed tables of drawings which depict a preferred embodiment, where no limitation of the scope of the invention is intended, and where:
figures 1 and 1A are schematic representations, in a perspective view, of the machining centre of this invention;
figure 2 is a schematic representation of the upper vertical operating unit to show the movements of the tool along its five axes;
figure 3 is a schematic representation of the lower horizontal operating unit to show the movements of the tool along its five axes; figure 4 is a schematic representation of the operating range that can be run by the upper vertical operating unit;
figure 5 is a schematic representation of the operating range that can be run by the lower horizontal operating unit;
figure 6 is a schematic representation of the electric chuck installed on the upper vertical unit, to which the machining tools are connected, to show the part gripping and handling means;
figure 7 is a schematic representation of the electric chuck installed on the lower horizontal unit, to which the machining tools are connected, to show the part gripping and handling means;
figure 8 is a schematic representation of a column with the part laying and locking bench, to show the related pinching systems.

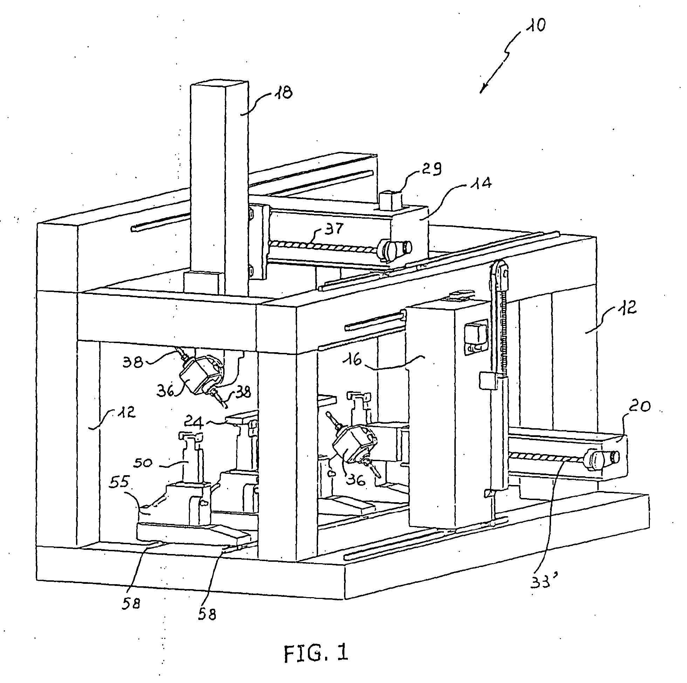

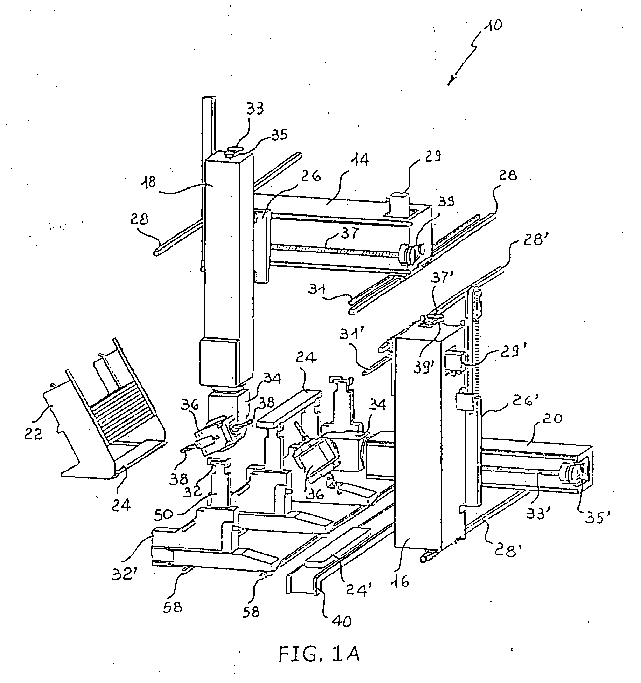

With reference to the above-mentioned figures, the machining centre with two operating units and with part handling units of this invention, whose reference number in the assembly is 10 in figures figure 1 and 1A, includes a bearing frame 12, for instance with a regular parallelepiped or prismatic expansion, formed of a plurality of beams or side members connected to one another in a known manner. The bearing frame 12 acts as a support for two pairs of linear slides 28, 28' to which two operating units 18, 20, are connected, respectively, which, in association with carriages or skids 26,26', prove to be sliding on cross members 14, 16, which, in turn, are moved on the mentioned rails 28, 28' located on different levels or misaligned from one another.

For the purposes of promoting a clear understanding of the invention, figure 1A depicts the machining centre 10 without the bearing frame 12 and provided with an adjoining magazine 22, *per se* already known, where the parts to be machined are stored and grouped. The linear slides 28, 28' are located orthogonal to one another. Each cross member 14, 16 is equipped with a carriage 26, 26' along which the units 18 and 20 can move orthogonally as to the linear development of the slides themselves. Moreover, these very cross members 14 and 16 are coupled with traditional sliding rails 28 28', along one of the Cartesian axes, as specified hereinafter. The sliding of cross members 14 and 16 on slides 28 and 28' is controlled by means of known devices such as precision motors and reducers 29 and 29' which, through special pinions, act on racks 31 and 31', or by means of ball bearing screws.

The movement of slides 26 and 26' is controlled by means of motors (not shown), connected to ball bearing screws 37 and 37' through belts 39 and 39', instead.

The movement of operating units 18 and 20 is likewise controlled by means of motors (not shown either), connected to further similar screws 33 and 33' through belts 35 and 35'. The machining centre 10 also includes one or more benches 32 held by frames 32' that support the parts 24 that are from time to time picked from the magazine 22 as indicated below.

Each of the operating units 18, 20 is equipped at one end with a revolving head 34, which supports a traditional electric chuck 36, which, in turn, rotates in a known way on the front side of head 34 which it is connected to. Electric chucks 36 include opposed shafts that are combined in a known way with the tools 38 required to execute the various machining sessions over the parts 24. Under the bench/benches 32 or adjoining it a storing and clearing device fro machined parts is located, one of which is referenced with 24' in figure 1A, such as for instance a conveyor belt 40, suited to transfer the parts 24 that have already been machined.

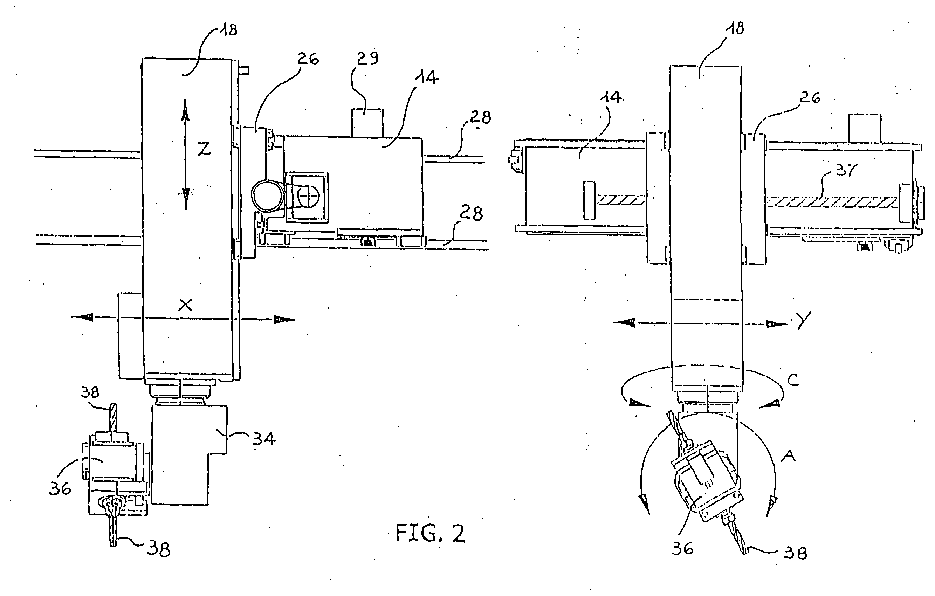

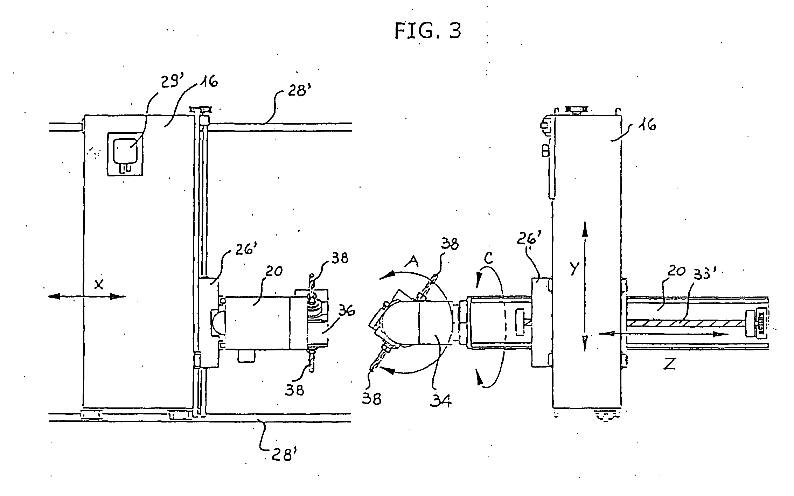

Electric chucks 36, and hence the tools that are connected to them, can move along 5 axes, as schematised in figures 2 and 3 in a detailed view. The "X" axis corresponds to the travel of units 18, 20 along the rails 28, 28', the "Y" axis along cross members 14, 16,- and the "Z" axis along similar slides. Axes "A" and "C" correspond to the rotation of electric chucks 36 as to the heads 34, and to the rotation of the latter heads as to units 18, 20, respectively.

According to this embodiment, which envisages the dislocation of the units 18, 20 over different levels and possibly orthogonal to one another, the parts 24 can be simultaneously machined in whatever position; once located on benches 32, where they are stabilized with known means, they do not typically demand any further handling, that is they may be treated in whatever position or face owing to the location of the operating units 18 and 20 with the associated electric chucks 36 and tools 38.

In cases when those surfaces that prove to be inaccessible because they rest on the benches or are engaged between the part gripping pincers must be reached, it is possible to translate or capsize the part during the machining stage through the systems that will be better described below.

Considering the machine structure and the arrangement of the work units, unit 14 located on top can easily access the machining to be executed on the upper, rear and side front faces of part 24; the lower horizontal unit 20, on the contrary, can easily access the upper, lower, rear and side faces.

Thus, all of the faces of one single part 24 can be machined, regardless of the positions in which the latter stands and is locked to. In cases when some of the positions or faces of the part 24 are not easily reached, through robot-driven handling, it is possible to capsize or reposition a part even during the work cycle, as explained below.

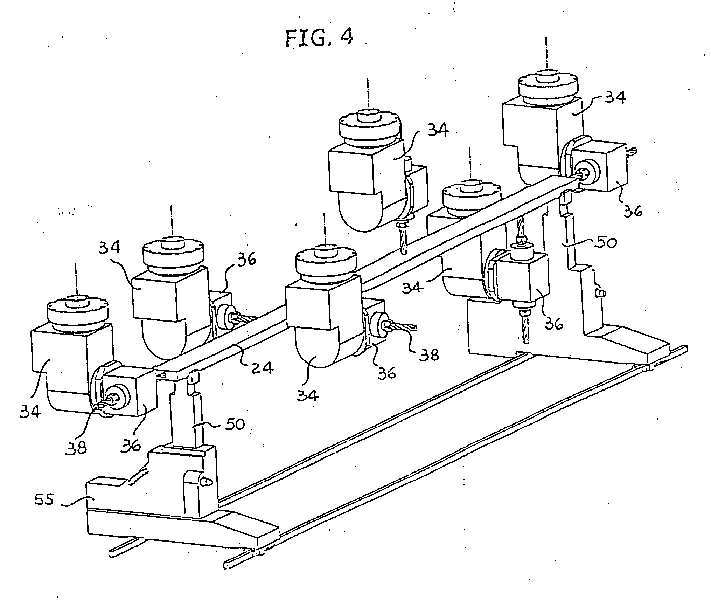

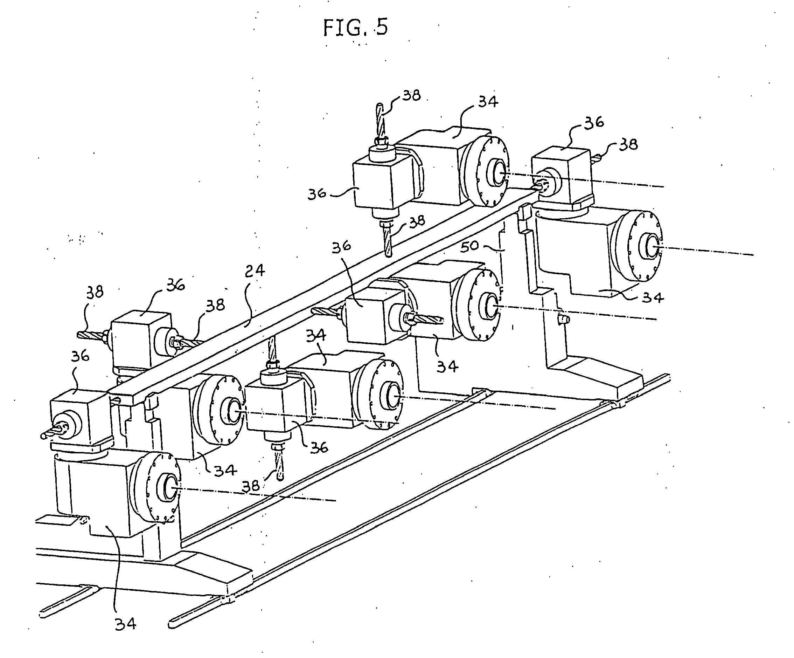

Figures 4 and 5 schematically depict the possible operating range of units 18, 20; figure 4 depicts the range of unit 18 or upper vertical unit, whereas figure 5 depicts that of unit 20 or lower horizontal unit. These figures easily show that the operating units 18, 20, in cooperation with one another, cover all of the surfaces or faces of parts 24, even getting to the point of potentially overlapping one another, moving freely and regardless of the longitudinal positions of one of the units as to the other one, and executing all type of machining both at the ends and along the part itself.

If it is necessary for both units to simultaneously operate in the same positions or in positions that are very close to one another, there is no need to take one out of the other one's operating range.

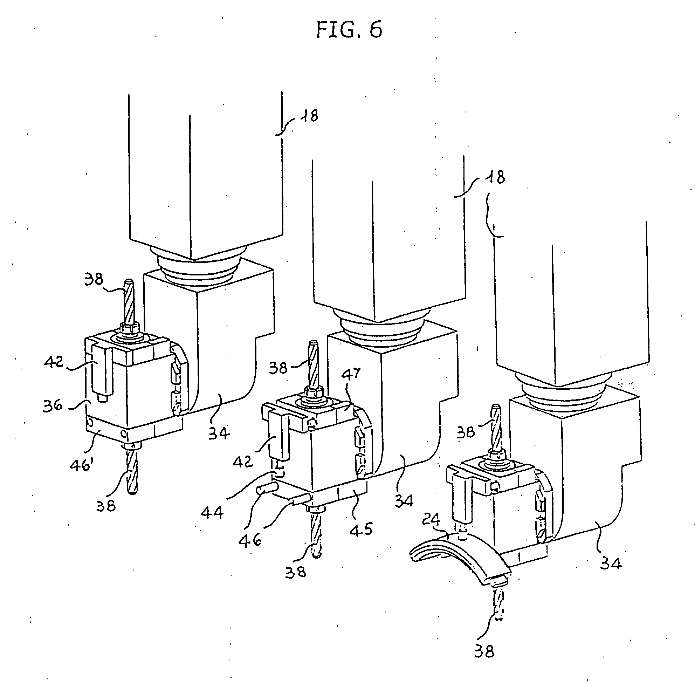

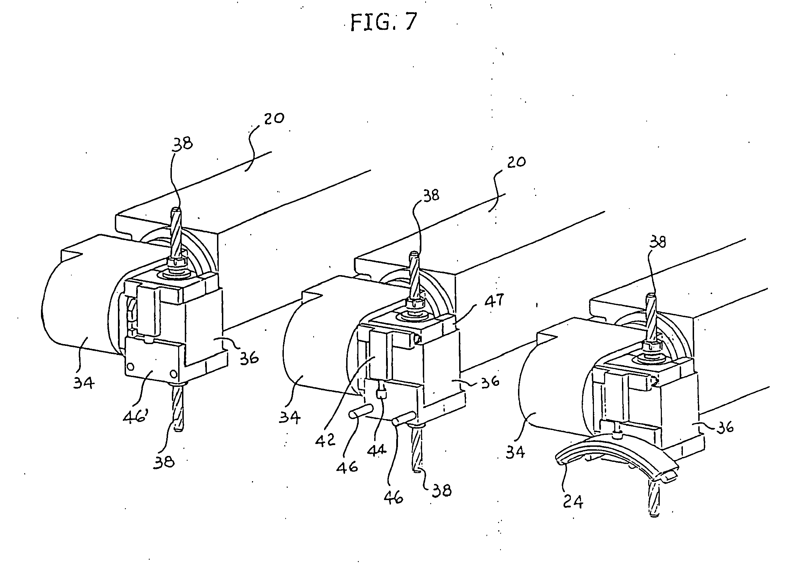

Beside this advantageous possibility, the machining centre 10 of this invention includes handling or picking and placing means 24 for the parts to be machined, such means being basically integrated or coupled with at least one of electric mandrels 36, preferably with both electric chucks that have been respectively brought from each operating unit 18 and 20. These handling or picking and handling means 24 and 24' include, in accordance with the preferred embodiment shown in figures 6 and 7, a pneumatic cylinder 42 or equivalent part, whose rod 44 is moved towards the locators 46.

Both the cylinder 42 and the locators 46 are mounted so as to be moved; therefore, during the machining, the locators 46 are supposed to be withdrawn inside special housings 46' and the cylinder 42 is lowered until it touches the electric mandrel surface 36. These movements are preferably controlled by means of pneumatic or hydraulic cylinders 45 and 47, and allow the dimensions that might reduce the electric chuck operativeness to be removed or reduced in a substantial way.

The locators 46 and the cylinder 42 are only exposed when a part 24 needs to be picked from the magazine 22 to be placed on work benches 32, or to move, capsize or remove a machined part 24' from the work benches 32 and place it on the stacking and clearing means 40.

Each part 24 is picked from the magazine 22 by inserting the locators 46, previously exposed through the action of cylinders 45, under the part itself, which is at the bottom of the stack, and hence actuating the cylinder 42 previously raised from the surface of the electric chuck 36 through the action of cylinder 47. The rod 44, at this very moment, locates part 24 by compressing it against the locators 46 and temporarily stabilizing it.

The unit 18 or 20 that bears the electric chuck 36 that caught the part is then duly moved along one or more axes to take the part 24 onto one of the benches 32 and lay it there, provided that the stem 44 of cylinder 42 moves backwards before.

Once the part 24 has been located on the work bench 32, both the locators 46 and the cylinder 42 are retracted and taken to their hidden position.

The cylinder 42 and the related locators 46 are preferably fastened above or at one side of both electric chucks 36 taken by the operating units 18 and 20.

The part is blocked on benches 32, which provide bearings 52 that can be revolved and tilted on the horizontal axis B. These benches are advantageously made by faceting the body of small-gauged cylinders which can thus be rotated in special locations. These cylinders provide for the part to be pinched on the front and rear sides, so that most of the surfaces to be machined remain free. Their stroke is suited to the gripping of variable-width parts.

This invention, besides the described loading/unloading systems and benches, may also include other replacement or additional systems of known type, which are such as to allow parts having extended or more or less bulky shapes to be lodged and blocked.

Furthermore, it also necessary to envisage the possibility that the machining centre is equipped with automatic and fast loading/unloading means for parts having extended shapes.

In this case, the benches will be equipped with traditional pneumatic clamping devices with pressing members that operate in a bottom-up or a top-down direction.

To lodge bulky parts, for instance, bearing surfaces are envisaged, fittingly equipped with vacuum-operated clamping systems, and in such a case the loading/unloading will take place in manual mode.

The several types of benches 32 so far described finally envisage the possibility for these benches to be mounted on automatically-positioning columns 50, which are moved by the action of the operating units 18 and 20 which, in this case, replace the operator in setting the equipment.

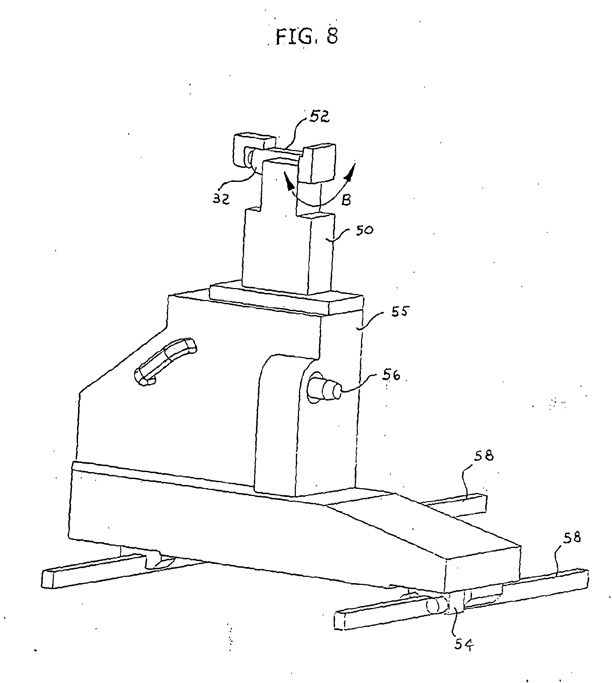

As shown in figure 8, each bench 32 actually includes a blocking device in position 54 which is released by the action of one of the two operating units 18 and 20. During this action, a special pin 56 is inserted into a special seat provided on the operating unit and the movement of the operating units along the longitudinal slides 28, 28' allows the bench-holding columns 50 to be positioned along special slides 58 in pre-arranged positions of the part machining programme to be executed. Upon release of the driving pin 56, the column 50 locks in place.

Each operating unit can thus turn into a part handling robot as well as into an automatic machine setting system.

As one can discern from the above description, the benefits that ensue from this invention are immediately clear.

The machining centre 10 of this invention allows for operating in whatever position over the whole surface exposed or on all faces of the parts 24, regardless of their section and does not normally demand intermediate handling of the parts, once these have been placed and secured to the bench 32. In cases when one wants to reach surfaces that prove to be inaccessible, due to the fact that they are resting on the benches or taken between the part gripping pincers, the machining centre of this invention actually allows the part to be translated or capsized while it is being machined. This machining centre also features a monolithic structure that properly supports the operating units, the loading/unloading systems and the part resting and clamping benches, with the achievement of rigidity and accuracy values that are typical of numerically-controlled systems. Moreover, a special benefit is derived from the possibility of easily handling the parts 24 without resorting to cumbersome and expensive handling robots, as the means 42, 46 are provided directly on the operating units 18, 20 and, preferably, on the electric chucks 36, too.

Wherever required, these handling means, which can move along the 5 axes provided to move the operating units, will allow a part 24 to be capsized or relocated on the benches even during the work cycle, so as to promote the full machining of all the part faces. In fact, it may be necessary to work on the part resting or clamping areas on the benches and, in such a case, it is indispensable to move or capsize it.

The special conformation of machining centre according to the invention allows the operating units 18 and 20 to move freely to carry out all type of machining both at the ends and lengthwise of a part 24 by overlapping their range of action, regardless of the longitudinal positions of cross members 14 and 16 that help supporting and sliding either unit as to the other one, no need to take one of them out of the other one's range of action in cases when these units are required to simultaneously operate in one position or in positions that are very dose to one another.

Although the foregoing disclosure of embodiment of the present invention has been presented for purposes of illustration and description, it is not intended to be exhaustive or to limit the invention to the precise form disclosed, and many variations and modifications of the embodiment described herein will be obvious to one of ordinary skill in the art in the art of the above disclosure. Therefore, this invention is meant to include all modifications and variations that fall within the scope of the invention defined by the claims appended hereto.

## Claims

1. A machining centre (10) that is specially suited to perform operations on parts or semi finished parts (24) of chairs, pieces of furniture and door hardware from woody materials, plastics or light metals, located on one or more work benches (32) and leaving from a magazine (22),
said machining centre (10) including two operating units (18, 20), each combined with a respective carriage (26-26) for sliding along a respective cross member (14-16), said cross members being in turn position-adjusted and developed orthogonally to one another,
each of said cross member (14-16) moving on rail pairs (28-28') along a direction parallel to a first axis (X),
each of said operating units (18-20) being further movable through said carriage (26-26) along a direction parallel to a second axis (Y) which is orthogonal to said first axis (X), and along a direction parallel to a third axis (Z) orthogonal to both said first and second axes (X, Y),
each of said operating units being equipped, at one end, with an electric chuck (36) with shafts to which machining tools (38) are connected, each of said chucks being rotatably (A) connected to a head (34) which in turn is rotatable (C) around said third axis (Z),
said machining centre further including said one or more work benches (32).

2. The machining centre according to claim 1, **characterized in that** it includes a bearing frame (12) that forms a monolithic structure supporting both said operating units (14) and (16) and said benches (32), these latter acting as resting and clamping surfaces for the pieces to be machined.

3. The machining centre according to claim 1, **characterized in that** said operating units (18) and (20) are freely movable whereby their ranges of action overlap to one another and a part (24) can be machined both at its ends and lengthwise, regardless of the longitudinal positions of said cross members (1,4) and (16) supporting and sliding one unit with respect to the other.

4. The machining centre according to claims 1 to 3, **characterized in that** it Includes, on the operating units (18 and 20), gripping, handling and transport means (42-44-46) of the parts (24) located in said magazine (22).

5. The machining centre according to claim 4, **characterized in that** said gripping and handling means (42-44) include pneumatic or equivalent-type cylinders and the related rod, and are laterally secured to at least one of said electric chucks (36) fastened to one end of the operating units (18-20).

6. The machining centre according to claim 5, **characterized in that** said gripping and handling means (46) include a moving locator that collaborates with the rod (44) of said cylinder/s (42), this moving locator being integral with at least one of the electric chucks (36) of the operating units.

7. The machining centre according to claim 6, **characterized in that** the said locators (46) and said cylinder/s (42) are driven by pneumatic or hydraulic pistons (45, 47) that move them into seats (46') and in contact wit said electric chuck/s (36), respectively.

8. The machining centre according to any of the previous claims, **characterized in that** said operating units (18 and 20) include means for gripping, releasing and moving the bearing columns of the benches bearing said parts (24) so that the setting of their positions is automatically adjustable and can be stored in a Numerical Control program provided for machining said parts (24).

9. The machining centre according to any of the previous claims, **characterized in that** it provides for clamping means of said pieces (24) comprising small-gauged cylinders with adjustable strokes.

10. The machining centre according to any of the previous claims, **characterized in that** said parts (24) are clamped on the work benches (32), which are horizontally adjustable so as to adapt to any curved shape of said parts (24).

11. The machining centre according to any of the previous claims, **characterized in that** said operating units (18 and 20) include one or more columns (50) that support said benches (32), each of the said benches being equipped with a position clamping device (54) cooperating with said operating units (18 and 20).

12. The machining centre according to any of the previous claims, **characterized in that** said benches (32) include at least one pin (56) to be inserted into a corresponding seat formed on said operating units (18 and 20) when said columns (50) are moved along slides (58) that are fastened to said bearing frame (12).

13. The machining centre according to any of the previous claims, **characterized in that** said parts (24) are clamped on the benches (32) next to bearing levels (52) that can be adjusted along one or more axes.

14. The machining centre according to any of the previous claims, **characterized in that** said bench/es (32) is/are matched with at least one device (40) for storing and clearing the machined parts (24').

15. The machining centre according to claim 14, **characterized in that** said at least one device for storing and clearing the machined parts (24') is a conveyor belt.

16. The machining centre according to any of the previous claims, **characterized in that** it includes three or more numerieally-controlled axes for the machining and/or handling of said parts (24, 24'), as well as for the setting of the machining centre itself.

## Patentansprüche

1. Bearbeitungszentrum (10), welches sich insbesondere zum Ausführung von Arbeitsschritten an Teilen oder halbfertigen Teilen (24) von Stühlen, Möbelstücken und Türenbeschlägen aus hölzernen Materialien, Kunststoffen oder Leichtmetallen eignet, angeordnet auf einer oder mehreren Werkbänken (32) und welche aus einem Magazin (22) heraustreten, wobei
das Bearbeitungszentrum (10) zwei Arbeitseinheiten (18, 20) enthält, welche alle mit einem jeweiligen Schlitten (26-26') zum Gleiten entlang eines jeweiligen Querelements (14-16) kombiniert sind, wobei die Querelemente ihrerseits hinsichtlich ihrer Position eingestellt sind und sich orthogonal zueinander entwickeln,
jedes der Querelemente (14-16) sich auf Schienenpaaren (28-28') entlang einer Richtung parallel zu einer ersten Achse (X) bewegt,
jede der Arbeitseinheiten (28-20) ferner durch den Schritten (26-26') entlang einer Richtung parallel zu einer zweiten Achse (Y) bewegbar sind, welche orthogonal zu der ersten Achse (X) ist, und entlang einer Richtung parallel zu einer dritten Achse (Z) sind, die orthogonal sowohl zu der ersten als auch der zweiten Achse (X, Y) ist, und wobei
jede der Arbeitseinheiten an einem Ende mit einer elektrischen Spannvorrichtung (36) mit Wellen, an welche Bearbeitungswerkzeuge (38) angeschlossen werden, versehen ist, wobei jede der Spannvorrichtungen drehbar (A) an einem Kopf (34) angeschlossen ist, welcher seinerseits drehbar (C) um die dritte Achse (Z) ist,
wobei das Bearbeitungszentrum ferner die eine Werkbank oder die mehreren Werkbänke (32) enthält.

2. Bearbeitungszentrum gemäß Anspruch 1, **dadurch gekennzeichnet, dass** es einen Tragrahmen (12) enthält, welcher einen monolithischen Aufbau ausbildet, der beide Arbeitseinheiten (14) und (16) und die Bänke (32) trägt, wobei letztere als Ruhe- und Klemmoberflächen für die zu bearbeitenden Stücke wirken.

3. Bearbeitungszentrum gemäß Anspruch 1, **dadurch gekennzeichnet, dass** die Arbeitseinheiten (18) und (20) frei bewegbar sind, wobei deren Arbeitsbereiche einander überlappen, und wobei ein Teil (24) sowohl an seinen Enden wie auch längs bearbeitet werden kann, dies ungeachtet der Längspositionen der Querelemente (14) und (16), welche eine Einheit bezüglich der anderen tragen und gleiten lassen.

4. Bearbeitungszentrum gemäß Anspruch 1 bis 3, **dadurch gekennzeichnet, dass** es auf den Arbeitseinheiten (18) und (20) Greif-, Handhabungs- und Transportmittel (42-44-46) der Teile (24) enthält, die in dem Magazin (22) angeordnet sind.

5. Bearbeitungszentrum gemäß Anspruch 4, **dadurch gekennzeichnet, dass** die Greif- und Handhabungsmittel (42-44) pneumatische oder gleichwertige Zylinder und die zugehörige Stange enthalten und seitlich an zumindest einer der elektrischen Spannvorrichtungen (36) befestigt sind, die an ein Ende der Arbeitseinheiten (18-20) befestigt sind.

6. Bearbeitungszentrum gemäß Anspruch 5, **dadurch gekennzeichnet, dass** die Greif- und Handhabungsmittel (46) einen bewegenden Postionierer enthalten, der mit der Stange (44) des Zylinders/der Zylinder (42) zusammenarbeiten, wobei dieser bewegende Postionierer integral mit zumindest einer der elektrischen Spannvorrichtungen (36) der Arbeitseinheiten ist.

7. Bearbeitungszentrum gemäß Anspruch 6, **dadurch gekennzeichnet, dass** die Postionierer (46) und der Zylinder/die Zylinder (42) durch pneumatische oder hydraulische Kolben (45, 47) angetrieben werden, welche diese in Sitze (46') bewegen, und in Kontakt mit jeweils der elektrischen Spannvorrichtung/den elektrischen Spannvorrichtungen (36) ist.

8. Bearbeitungszentrum gemäß irgendeinem der vorhergehenden Ansprüche, **dadurch gekennzeichnet, dass** die Arbeitseinheiten (18 und 20) ein Mittel zum Greifen, Freigeben und Bewegen der Tragsäulen der Bänke enthalten, welche die Teile (24) tragen, so dass die Einstellung von deren Positionen automatisch einstellbar ist und in einem numerischen Steuerprogramm gespeichert werden kann, dass zum Bearbeiten der Teile (24) vorgesehen ist.

9. Bearbeitungszentrum gemäß irgendeinem der vorhergehenden Ansprüche, **dadurch gekennzeichnet, dass** es Klemmmittel der Stücke (24) bereitstellt, welche kleinbemessene Zylinder mit einstellbaren Hüben umfassen.

10. Bearbeitungszentrum gemäß einem der vorhergehenden Ansprüche, **dadurch gekennzeichnet, dass** die Teile (24) auf die Werkbänke (32) geklemmt sind, welche horizontal einstellbar sind, um sich so an jede gekrümmte Form der Teile (24) anzupassen.

11. Bearbeitungszentrum gemäß irgendeinem der vorhergehenden Ansprüche, **dadurch gekennzeichnet, dass** die Arbeitseinheiten (18 und 20) ein oder mehrere Säulen (50) enthalten, welche die Bänke (32) tragen, wobei jede der Bänke mit einer Positionsklemmeinrichtung (54) versehen ist, die mit den Arbeitseinheiten (18 und 20) zusammenarbeiten.

12. Bearbeitungszentrum gemäß irgendeinem der vorhergehenden Ansprüche, **dadurch gekennzeichnet, dass** die Bänke (32) zumindest einen Stift (56) zum Einsetzen in einen entsprechenden Sitz enthalten, der auf den Arbeitseinheiten (18 und 20) ausgebildet ist, wenn die Säulen (50) entlang Gleitflächen (58) bewegt werden, welche an dem Tragrahmen (12) befestigt sind.

13. Bearbeitungszentrum gemäß irgendeinem der vorhergehenden Ansprüche, **dadurch gekennzeichnet, dass** die Teile (24) auf den Bänken (32) neben Traghebeln (52) geklemmt sind bzw. werden, die entlang einer oder mehrerer Achsen eingestellt werden können,.

14. Bearbeitungszentrum gemäß irgendeinem der vorhergehenden Ansprüche, **dadurch gekennzeichnet, dass** die Bank/die Bänke (32) mit zumindest einer Einrichtung (40) zur Lagerung und Bereinigung der bearbeiteten Teile (24') zusammenpasst/zusammenpassen.

15. Bearbeitungszentrum gemäß Anspruch 14, **dadurch gekennzeichnet, dass** die zumindest eine Einrichtung zur Lagerung und Bereinigung der bearbeiteten Teile (24') ein Förderriemen ist.

16. Bearbeitungszentrum gemäß irgendeinem der vorhergehenden Ansprüche, **dadurch gekennzeichnet, dass** es drei oder mehr numerisch gesteuerte Achsen für die Bearbeitung und/oder die Handhabung der Teile (24, 24'), sowie für die Einstellung des Bearbeitungszentrums selbst enthält.

## Revendications

1. Centre d'usinage (10) qui est spécialement adapté à exécuter des opérations sur des pièces ou des pièces semi-finies (24) de chaises, éléments de meubles et quincaillerie de portes en matières de type bois, matières plastiques ou métaux légers, disposé sur un ou plusieurs bancs d'usinage (32) et alimenté à partir d'un magasin (22),
ledit centre d'usinage (10) incluant deux unités d'exploitation (18, 20) combinées chacune à un chariot respectif (26 - 26') de manière à coulisser le long d'un élément transversal respectif (14 - 16); lesdits éléments transversaux étant eux-mêmes ajustés en position et développés orthogonalement l'un à l'autre,
chacun desdits éléments transversaux (14 - 16) se déplaçant sur des paire de rails (28 - 28') dans une direction parallèle à un premier axe (X),
chacune desdites unités d'exploitation (18 - 20) étant en outre mobile sous l'effet dudit chariot (26 - 26') dans une direction parallèle à un deuxième axe (Y) qui est orthogonal audit premier axe (X), et dans une direction parallèle à un troisième axe (Z) orthogonal à l'un et l'autre desdits premier et deuxième axes (X, Y),
chacune desdites unité d'exploitation étant équipée, à l'une de ses extrémités, d'un mandrin électrique (36) comportant des arbres auxquels des outils d'usinage (38) sont connectés, chacun desdits mandrins étant connecté à rotation (A) à une tête (34) qui peut elle-méme tourner (C) autour dudit troisième axe (Z),
ledit centre d'usinage incluant en outre ledit ou lesdits bancs (32).

2. Centre d'usinage selon la revendication 1, **caractérisé en ce qu'**il inclut un bâti porteur (12) qui forme une structure monolithique qui supporte lesdites deux unités d'exploitation (14) et (16) et lesdits bancs (32), ces derniers agissant comme surface d'appui et de serrage pour les pièces à usiner.

3. Centre d'usinage selon la revendication 1, **caractérisé en ce que** lesdites unités d'exploitation (18, 20) sont déplaçables librement d'une manière telle que leurs plages d'action se recouvrent l'une l'autre, et qu'une pièce (24) peut être usinée tant à ses extrémités que longitudinalement, indépendamment des positions longitudinales desdits éléments transversaux (14) et (16) qui supportent et font coulisser l'une des unités par rapport à l'autre.

4. Centre d'usinage selon l'une quelconque des revendications précédentes, **caractérisé en ce qu'**il inclut, sur les unités d'exploitation (18 et 20), des moyens de saisie, de manutention et de transport (42 - 44 - 46) des pièces (24) situées dans ledit magasin (22).

5. Centre d'usinage selon la revendication 4, **caractérisé en ce que** lesdits moyens de saisie et de manutention (42 - 44) incluent des vérins de type pneumatique ou équivalent et la tige correspondante, et sont fixés latéralement à au moins l'un desdits mandrins électriques (36) attaché à l'une des extrémités des unités d'exploitation (18 - 20).

6. Centre d'usinage selon la revendication 5, **caractérisé en ce que** lesdits moyens de saisie et de manutention (46) incluent un positionneur mobile qui collabore avec la tige (44) dudit ou desdits vérin(s) (42), ce positionneur mobile étant d'un seul tenant avec au moins l'un desdits mandrins électriques (36) des unités d'exploitation.

7. Centre d'usinage selon la revendication 6, **caractérisé en ce que** lesdits positionneurs (46) et ledit ou lesdits vérin(s) (42) sont actionnés par des pistons pneumatiques ou hydrauliques (45, 47) qui les introduisent dans des logements (46') et les mettent en contact avec ledit ou lesdits mandrin(s) électrique(s), respectivement.

8. Centre d'usinage selon l'une quelconque des revendications précédentes, **caractérisé en ce que** lesdites unités d'exploitation (18 et 20) incluent des moyens de saisie, de relâchement et de déplacement des colonnes porteuses des bancs qui portent lesdites pièces (24), de sorte que le réglage de leurs positions peut être ajusté automatiquement et peut être stocké dans un programme de Commande Numérique établi pour usiner lesdites pièces (24).

9. Centre d'usinage selon l'une quelconque des revendications précédentes, **caractérisé en ce qu'**il prévoit des moyens de serrage desdites pièces (24) comprenant des vérins de petit calibre à courses réglables.

10. Centre d'usinage selon l'une quelconque des revendications précédentes, **caractérisé en ce que** lesdits pièces (24) sont serrées sur les bancs d'usinage (32), qui sont ajustables horizontalement de manière à s'adapter à tout configuration incurvée desdites pièces (24).

11. Centre d'usinage selon l'une quelconque des revendications précédentes, **caractérisé en ce que** lesdits unités d'exploitation (18 et 20) incluent une ou plusieurs colonnes (50) qui supportent lesdits bancs (32), chacun desdits bancs étant équipé d'un dispositif (54) de serrage en position coopérant avec lesdites unités d'exploitation (18 et 20).

12. Centre d'usinage selon l'une quelconque des revendications précédentes, **caractérisé en ce que** lesdits bancs (32) incluent au moins une broche (56) à insérer dans un logement correspondant formé sur lesdites unités d'exploitation (18 et 20) lorsque lesdites colonnes (50) sont déplacées le long de coulisses (58) qui sont attachées audit bâti porteur (12).

13. Centre d'usinage selon l'une quelconque des revendications précédentes, **caractérisé en ce que** lesdites pièces (24) sont serrées sur les bancs (32) près de niveaux de supports (52) qui peuvent être ajustés le long d'un ou plusieurs axes.

14. Centre d'usinage selon l'une quelconque des revendications précédentes, **caractérisé en ce que** ledit ou lesdits bancs (32) sont appariés avec au moins un dispositif (40) de stockage et d'enlèvement des pièces usinées (24').

15. Centre d'usinage selon la revendication 14, **caractérisé en ce que** ledit au moins un dispositif de stockage et d'enlèvement des pièces usinées (24') est une bande transporteuse.

16. Centre d'usinage selon l'une quelconque des revendications précédentes, **caractérisé en ce qu'**il comprend trois axes à commande numérique ou davantage pour l'usinage et la manutention desdites pièces (24, 24'), ainsi que pour le réglage du centre d'usinage lui-même.
